# EUROPÄISCHE PATENTSCHRIFT

(11) **EP 3 186 024 B1**
(45) Veröffentlichungstag und Bekanntmachung des Hinweises auf die Patenterteilung: **26.09.2018**
(21) Anmeldenummer: 15787449.6
(22) Anmeldetag: 27.08.2015
(51) Int. Cl.: B23C 5/08, B23C 5/28, B22F 3/105, B23Q 11/10

(54) **SCHEIBENFRÄSER UND HERSTELLVERFAHREN**
DISC-TYPE MILLING CUTTER AND METHOD OF MANUFACTURE
FRAISE-DISQUE ET PROCÉDÉ DE FABRICATION

(30) Priorität: 27.08.2014 DE 102014012481
(43) Veröffentlichungstag der Anmeldung: 05.07.2017
(73) Patentinhaber: Rosswag GmbH, 76327 Pfinztal (DE)
(72) Erfinder: DONISI, Sven, 76327 Pfinztal (DE); GRAF, Gregor, 76327 Pfinztal (DE)
(74) Vertreter: mepat Patentanwälte
(86) Internationale Anmeldenummer: PCT/EP2015/001745
(87) Internationale Veröffentlichungsnummer: WO 2016/030016

(56) Entgegenhaltungen:
- EP-A1- 1 864 748
- DE-A1- 3 104 752
- DE-A1- 10 145 006
- DE-A1-102004 011 309
- DE-A1-102004 032 093
- DE-A1-102006 001 747
- US-A1- 2003 223 831
- US-A1- 2004 258 496
- US-A1- 2011 182 678

## Beschreibung

Die nachfolgende Erfindung bezieht sich auf einen Scheibenfräser gemäß dem Oberbegriff des Anspruchs 1 und auf ein Herstellverfahren dafür.

Ein derartiger Scheibenfräser ist aus dem Dokument DE 10 2004 011 309 A bekannt. Bei der spanenden Bearbeitung von Werkstücken werden die Schneidwerkzeuge gekühlt, um eine Überhitzung und damit vorzeitigen Verschleiß der Schneide zu verhindern. Die hierfür eingesetzten Kühlschmierstoffe bestehen hauptsächlich aus Wasser und enthalten bestimmte Additive, etwa zur Schmierung, Veränderung der Benetzungseigenschaften und/oder Antischäummittel. Frühe Systeme arbeiteten mit großen Volumenströmen und einer örtlich vergleichsweise undefinierten Kühlschmierstoffausbringung, etwa über flexible Schläuche, die an das Schneidwerkzeug heran geführt wurden.
Diese Art der Kühlung, auch Überflutungs- oder Schwallkühlung genannt, hat den Nachteil, dass der Kühlschmierstoffverbrauch sehr hoch und die Kühlung wenig effektiv ist, da der Ort der Wärmeentwicklung, nämlich die Schneide selbst, nur unzureichend mit Kühlschmierstoff versorgt wird; abfliegende und/oder sich auf dem Schneidwerkzeug absetzende Späne können hierbei den Kühlschmiermittelstrahl ablenken und so die Kühlung der Schneide beeinträchtigen. Beim Fräsen sehr enger und/oder tiefer Nuten mittels Scheibenfräser kann es sogar passieren, dass die Kühlschmiermittelzufuhr zur Schneide nahezu zum Erliegen kommt, da das Fräswerkzeug selbst die Zufuhr blockiert.
Um ein ähnliches Problem beim Drehen zu lösen, sind beispielsweise Schneidwerkzeughalter bekannt, die innen liegende Kühlkanäle haben, die es erlauben, Kühlschmierstoff unter Hochdruck direkt zum Schneidwerkzeug zu fördern, etwa aus DE 20 2012 004 900 U1 und WO 2013 132480 A1.
Einen Scheibenfräser offenbart auch die DE 10 2004 011309 A1, der einen Scheibenkörper mit einer zentralen Nabe zur Aufnahme in einem Fräsantrieb aufweist. In dem Scheibenkörper verläuft eine Mehrzahl innen liegender Kühlkanäle.
Ein Zerspanwerkzeug, das generativ gefertigt ist, beschreibt die EP 1 864 748 A1 - es adressiert ebenfalls die Thematik der Kühlmittelzufuhr.
Ferner kennt man innen gekühlte Schaftfräser, etwa einen innen gekühlten Vollhartmetallfräser für rostfreien Stahl, der innen liegend zwei helixartig gedrallte Kühlschmiermittelkanäle hat.

Mit diesem Schaftfräser können zwar relativ kurze und tiefe Nuten, beispielsweise zur Aufnahme für Passfedern hergestellt werden; zur Erzeugung von langen Nuten, Lagersitzen und ähnlichen Geometrien mit hohen Schnittgeschwindigkeiten ist dieser aber ungeeignet. Zu diesem Zweck werden nach wie vor Scheibenfräser eingesetzt, die auch beim Einsatz von Schneidplatten aus Hartmetall eine stark begrenzte maximale Schnittgeschwindigkeit haben. Zur Kühlung der Scheibenfräser kommt in der Regel konventionelle Schwallkühlung zum Einsatz.

Ausgehend von diesem Stand der Technik liegt der vorliegenden Erfindung die Aufgabe zu Grunde, einen verbesserten Scheibenfräser zu schaffen, der sich durch eine höhere erreichbare Schnittgeschwindigkeit und eine erhöhte Standzeit der Schneiden auszeichnet.

Diese Aufgabe wird durch einen Scheibenfräser mit den Merkmalen des unabhängigen Anspruchs 1 gelöst.

Darüber hinaus ergibt sich die Aufgabe, ein Herstellverfahren für den Scheibenfräser zu schaffen, mit dem dieser in wenigen Arbeitsschritten kostengünstig herstellbar ist.

Diese Aufgabe wird durch ein Herstellverfahren mit den Merkmalen des Anspruchs 10 gelöst.

Bevorzugte Ausführungsbeispiele der Vorrichtung und des Verfahrens werden durch die jeweiligen Unteransprüche beschrieben.

Der erfindungsgemäße generativ gefertigte Scheibenfräser weist einen Scheibenkörper mit einer zentralen Nabe zur Aufnahme in einem Fräsantrieb und an seinem Außenumfang eine Mehrzahl Schneiden auf. In dem Scheibenkörper verlaufen mehrere innen liegende Kühlschmiermittelkanäle, die im Bereich jeder Schneide zwei oder mehr Austrittsöffnungen haben. Die Austrittsöffnungen sind so ausgerichtet, dass je ein Kühlschmiermittelstrahl, der aus dem Kühlschmiermittelkanal austritt, auf die Schneide gerichtet werden kann. Die Nabe kann dabei vorteilhaft einstückig mit dem Scheibenkörper ausgebildet sein. Vorteilhaft hat die Nabe eine größere Materialstärke als der Scheibenkörper, um eine sichere Kopplung zur Drehmomenteinleitung mit dem Fräsantrieb zu ermöglichen. Dass an "jeder Schneide zwei oder mehr Austrittsöffnungen vorliegen", umfasst die Lösung, bei der sich zu der Schneide zwei zumindest teilweise getrennte Kühlschmiermittelkanäle erstrecken. Die im Bereich der Schneide angeordneten Austrittsöffnungen sind dazu vorgesehen, einen Kühlschmiermittelstrahl direkt auf die Schneide zu richten, was sowohl dazu beiträgt, den Spanabtransport zu verbessern, als auch, den Schneidenkörper kühler zu halten, was auch der Wärmeausdehnung des Scheibenkörpers entgegen wirkt und so der Fertigungsgenauigkeit zu Gute kommt. Die zwei Austrittsöffnungen sind ferner erfindungsgemäße dazu ausgebildet, die Kühlschmiermittelstrahlen in einem vorbestimmten Winkelversatz auf die Schneide zu richten, um den Spanabtransport zu unterstützen und den Scheibenkörper zu kühlen. Die Richtung, in der der Kühlschmiermittelstrahl aus der Austrittsöffnung austritt, wird hierbei maßgeblich durch die Ausrichtung der Kanalachse bestimmt. Weil erfindungsgemäß vorgesehen ist, dass die Kühlschmiermittelstrahlen an unterschiedlichen Orten auf die Schneide treffen, können die beiden Kühlschmiermittelstrahlen also unterschiedliche Funktionen erfüllen, wobei einer der Kühlschmiermittelstrahlen zum Kühlen der Schneide und Unterstützung des Spanbruchs vorgesehen ist und der andere die Späne aus der Fräsnut befördert. Damit ist im Betrieb zumindest einer der Kühlschmiermittelstrahlen auf eine Spanablösungszone der Schneide gerichtet, wobei "Spanablösungszone" der Bereich der Schneide ist, in der der Span bricht, d. h., der Kühlschmiermittelstrahl ist vorteilhafter Weise exakt auf den "Spalt" zwischen Schneide und den sich im Betrieb ablösenden Spänen gerichtet.

Es ist auch möglich, dass die Austrittsöffnungen dazu ausgebildet sind, von unterschiedlichen Seiten oder aus entgegengesetzten Richtungen jeweils einen Kühlschmiermittelstrahl auf die Schneide zu richten.

Zusätzlich kann durch eine Zufuhr des Kühlschmierstoffs mit Hochdruck auf die Werkzeugschneide der Spanbruch unterstützt und eine geringere Spanraumzahl der Späne erreicht werden.

"Generative Fertigung", die in Abgrenzung zu den trennenden oder urformenden Fertigungsverfahren auch additive Fertigung genannt wird, schließt Pulverbettverfahren (z. B. Selektives Laserschmelzen, Elektronenstrahlschmelzen) und Auftragsverfahren bzw. Freiraumverfahren (z. B. Auftragsschweißen) mit ein. Eine solch komplexe Geometrie wie sie der erfindungsgemäße Scheibenfräser hat, wäre mit konventioneller Fertigungstechnik (spanende Fertigung, insb. Tiefbohren) nicht mehr fertigbar.

Unter "Schneide" wird hierin die scharfe Kante eines Werkzeugs verstanden, an der die Zerspanung stattfindet. Der Begriff umfasst hierin die Varianten scheibenkörperintegriert oder aber auswechselbar, insbesondere als eine Schneidplatte, die beispielsweise aus Hartmetall, Diamant oder Keramik bestehen kann. "Im Bereich" meint in Bezug zu der Austrittsöffnung, dass diese in einem Abstand von der Schneide vorliegt, der es eben noch ermöglicht, bei einem vorgegebenen Druck des Kühlschmiermittels ein "Bespritzen" der Schneide zu erreichen.

Darüber hinaus kann wenigstens eine der Austrittsöffnungen eine Düse aufweisen, die beispielweise in die Austrittsöffnung eingesetzt sein kann. Bei der Düse kann es sich um eine winkelverstellbare Düse handeln, über die, etwa in Abhängigkeit des zu bearbeitenden Werkstoffs, Schnittgeschwindigkeit etc., der Austrittswinkel individuell eingestellt werden kann. Die Düse bildet eine Verengung des Kühlschmiermittelkanals, was die Austrittsgeschwindigkeit des Kühlschmiermittels erhöht und dadurch den Spanbildungsprozess unterstützt.

Der Scheibenkörper des erfindungsgemäßen generativ gefertigten Scheibenfräsers kann eine Dicke in einem Bereich von 1 mm und 20 mm, insbesondere in einem Bereich von 2 mm und 12 mm, aufweisen.

Diese geringen Dicken sind mit konventioneller Fertigungstechnik (hier: Tiefbohren der KSS-Kanäle) nicht mehr fertigbar, da die Gefahr besteht, den Scheibenkörper durch die innen liegenden Kühlschmiermittelkanäle strukturell zu schwächen, sodass diese unter Einwirkung der Schnittkräfte versagt.

In einer weiteren Ausführungsform können sich die innen liegenden Kühlschmiermittelkanäle sternförmig von der Nabe weg erstrecken und/oder aus einer Mantelfläche des Scheibenkörpers austreten. Alternativ oder zusätzlich ist möglich, dass die Kühlschmiermittelkanäle schräg aus der Oberfläche des Scheibenkörpers austreten und/oder eine oder mehrere Umlenkung(en) haben, die bevorzugt in einem nahe den Austrittsöffnungen angeordneten Endabschnitt vorliegt/vorliegen. Die Umlenkung oder die Umlenkungen kann bzw. können dabei auch verrundet und/oder gekrümmt sein.

"Schräg" meint, dass der Kühlschmiermittelkanal nicht normal zu der Oberfläche (genauer zu einer Tangentialebene an die Oberfläche) austritt. Mit "sternförmig" ist im Bezug auf den Einzelkanal im Wesentlichen radial gemeint, es wird aber auch ein Verlauf der Kanäle erfasst, der geringfügig vom radialen Verlauf abweicht. Da ein Scheibenfräser die Schneiden an seiner Mantelfläche hat, ist es zweckmäßig für eine homogene Kühlung, die Austrittsöffnungen eben an der Mantelfläche vorzusehen; es ist aber nicht ausgeschlossen, die Austrittsöffnungen an einer Stirnfläche des Scheibenkörpers vorzusehen, wobei die Kanäle dabei beispielsweise unter einem sehr flachen Winkel austreten können. Der Kühlschmiermittelkanal muss sich hierbei nicht entlang der kürzesten Verbindung zwischen Zuführöffnung und Austrittsöffnung erstrecken, sondern sein Verlauf kann auch im Hinblick auf eine bestimmte zu erreichende Mindeststeifigkeit des Scheibenkörpers angepasst werden. Ein Kanal, der nicht gerade verläuft, kann aber auch notwendig werden, wenn Bohrungen oder ähnliches den direkten Weg "versperren"; der Kühlschmiermittelkanal kann hierbei auch eine oder mehrere Umlenkungen aufweisen, die vorteilhafter Weise verrundet sein können. Durch die Verrundung der Umlenkungen wird ein geringerer Druckverlust erreicht, was zu einer energiesparenden Betriebsweise beiträgt.

In einer noch weiteren Ausführungsform können die Kühlschmiermittelkanäle an einer Innenfläche der Nabe oder an einer Scheibenfläche austreten und dort jeweils eine Zuführöffnung für Kühlschmiermittel haben, die mit einer Kühlschmiermittelquelle fluidisch verbindbar ist. Die Kühlschmiermittelkanäle erstrecken sich dann jeweils von der Zuführöffnung zur Austrittsöffnung. Mit "Innenfläche" der Nabe ist die innere Mantelfläche gemeint, mit der die Nabe auf den Fräsantrieb aufgesteckt wird. Hier kann eine Zuführung des Kühlschmiermittels komfortabel über die Nabe, die bezüglich des Fräsantriebs drehfest ist, erfolgen; die Abdichtung ist dabei kein Problem, da nur stehend abgedichtet wird, wobei Standard-Dichtungselemente eingesetzt werden können.

Mit "Scheibenfläche" ist hierin die Stirnfläche der Scheibe gemeint, wobei ein Austritt der Kanäle in diesem Bereich es vorteilhaft ermöglicht, eine aufgeflanschte adapterförmige Ringstruktur mit innenliegenden Zuführkanälen einzusetzen, wobei die Kühlschmiermittelzufuhr über bisherige Austrittsöffnungen des Grundkörpers erfolgen kann.

Gemäß einer Weiterbildung kann an der Innenfläche der Nabe eine umlaufende Nut vorliegen, in der die Kühlschmiermittelkanäle münden. Die umlaufende Nut bildet dabei einen abdichtbaren Kopplungsabschnitt zur fluidischen Anbindung an die Kühlschmiermittelquelle. Man könnte auch sagen, die abdichtbare Nut fungiert als Sammelkanal, von dem aus alle Kühlschmiermittelkanäle versorgt werden; die den einzelnen Kühlschmiermittelkanälen zugeordneten Zuführöffnungen liegen somit am Nutgrund.

Die Schneiden können jeweils durch austauschbare Schneidplatten gebildet werden, die jeweils in einem zugehörigen Schneidplattensitz am Außenumfang des Scheibenkörpers aufgenommen sind. Solche Aufnahmesysteme von Schneidplatten sind bekannt, wobei das Grundprinzip darin liegt, die Zerspanung wirtschaftlicher zu machen, indem bei Verschleiß nur der eigentliche Schneidenkörper ausgetauscht wird und der Scheibenkörper als "Strukturkörper" weitergenutzt wird.

Solche Schneidplattensitze haben oft eine Schlitzung, wobei sich der Schlitz von dem Schneidplattensitz weg erstreckt. Hier ist eine im Wesentlichen radiale Erstreckung nach innen geeignet. Der Schlitz dient dazu, das an den Schlitz angrenzende Volumen des Halterkörpers zu "schwächen", um es leichter elastisch verformen zu können. Unter Einwirkung einer Spannvorrichtung, etwa einer Spannschraube, die normal zu dem Schlitz in den Halterkörper eingedreht ist, verengt sich der Schlitz und erlaubt es so, die Schneidplatte in dem Schneidplattensitz festzuklemmen. Der Schlitz kann an seinem dem Schneidplattensitz abgewandten Ende eine Verrundung aufweisen, die beispielsweise durch eine Bohrung, die parallel zur Schlitzebene verläuft, gebildet werden kann; dies mindert zudem die Kerbwirkung des Schlitzendes.

Einer oder mehrere der Kühlschmiermittelkanäle kann/können alternativ oder zusätzlich einen nicht-kreisförmigen Querschnitt haben, etwa einen rechteckigen Querschnitt. Geeignet ist etwa ein Querschnitt, der ein Breite-Höhe-Verhältnis von 1:2 und größer hat.

Über rechteckige Kanalquerschnitte kann auch bei einem extrem flachen Scheibenkörper eine vergleichsweise große durchströmte Fläche realisiert werden, wohingegen bei stets runden Bohrungen die durchströmte Fläche direkt mit der Dicke des Halterkörpers korreliert. Der Kanalquerschnitt kann auch verrundet oder insbesondere oval sein. Ebenfalls ist eine dreieckige oder bogenförmige Kanalquerschnittsform möglich, welche einen verbesserten Aufbau durch die höhere Stützwirkung des Überhangs während der generativen Fertigung ermöglicht.

Das erfindungsgemäße Herstellverfahren für den Scheibenfräser wird unter Verwendung einer generativen Fertigungsvorrichtung ausgeführt. Es umfasst die folgenden Schritte:
a) in die generative Fertigungsvorrichtung Laden eines 3D-Volumendatensatzes, der zumindest den Scheibenkörper mit der zentralen Nabe des Scheibenfräsers beschreibt,
b) Bereitstellen eines pulverförmigen Ausgangsmaterials,
c) schrittweise Herstellen eines Materialzusammenhalts des pulverförmigen Ausgangsmaterials, dabei schrittweise Herstellen des Scheibenkörpers mit der Mehrzahl innen liegender Kühlschmiermittelkanäle, die im Bereich jeder Schneide zumindest zwei Austrittsöffnungen haben, und der zentralen Nabe
d) Ausführen eines Schritts zur inneren Glättung der Kühlschmiermittelkanäle (3) mittels Strömungsschleifen.

Über generative Fertigungsverfahren, die in Abgrenzung zu den trennenden oder urformenden Fertigungsverfahren auch additive Fertigungsverfahren genannt werden, können selbst komplexeste Geometrien mit Hinterschnitten, verborgenen Innenteilen o. ä. hergestellt werden, die mittels Gießen und/oder spanender Bearbeitung nicht fertigbar wären.

Ein solches mit konventioneller Fertigungstechnik nur unter erhöhtem Aufwand oder gar nicht fertig bares Bauteil ist auch der erfindungsgemäße Scheibenfräser: Eine Mehrzahl Kühlschmiermittelkanäle, die im Bereich der umfänglich angeordneten Schneiden aus der Oberfläche austreten und sich von einer zentralen Zuführung an der Innenfläche der Nabe erstrecken, wäre mit herkömmlicher Bohrtechnik in den Durchmesserbereichen nicht herstellbar, da der Scheibenkörper oft unter 2 mm dick ist. Auch die zu bohrenden Längen übersteigen bei Scheibenkörpern mit großen Durchmessern häufig wirtschaftlich erreichbare Durchmesser-Längen-Verhältnisse.

Unter Verwendung generativer Fertigungstechnik können beliebig viele Kühlschmiermittelkanäle mit nahezu beliebig vielen Austrittsöffnungen ohne Zusatzkosten hergestellt werden; hierbei ist es sogar möglich innere Kanalverzweigungen vorzusehen, die strömungsmechanisch optimiert gestaltet werden können. Auch die Kanallänge ist nicht mehr begrenzt; so können beliebige Durchmesser-Längen-Verhältnisse erreicht werden, die bei Einsatz konventioneller Bohrtechnik nur unter Einsatz extrem teurer Tiefbohrtechnik zu erreichen wären.

Es ist sogar denkbar, einen nicht runden Kanalquerschnitt zu realisieren, etwa quadratisch oder rechteckig; dadurch kann eine vergleichsweise große durchströmte Querschnittsfläche auch in extrem dünnen Scheibenkörpern erreicht werden, wohingegen der durchströmte Querschnitt bei bekannten Lösungen direkt durch die Dicke des Scheibenkörpers begrenzt würde.

Mit "3D-Volumendatensatz" ist hierein ein CAD-Volumenmodell des Halterkörpers gemeint, das nicht nur die Hüllflächen beschreibt, sondern quasi als "Voxel" das Volumen. Die Volumendaten können auch erst in der generativen Fertigungsvorrichtung erzeugt werden, wobei die 3D-Daten etwa als Flächenmodell im STL-Format zur Verfügung gestellt werden und vollständig umschlossene Flächenzüge von der generativen Fertigungsvorrichtung als Volumen interpretiert werden. Um einen Volumenkörper zu erhalten wird zunächst in einer Ebene der Materialzusammenhalt vorgegebener Punkte hergestellt und dann Ebene für Ebene fortgefahren.

Hierdurch kann das Bauteil quasi in einem Schritt, mit geringem Nacharbeitsaufwand oder sogar nacharbeitsfrei und mit hoher Genauigkeit hergestellt werden. Zum Herstellen des Materialzusammenhalts kann das pulverförmige Ausgangsmaterial vollständig aufgeschmolzen werden oder aber der Materialzusammenhalt wird vorläufig durch partielles Verschmelzen der Pulverpartikel erzeugt. Alternativ kann hierbei auch durch das Verwenden niedrigschmelzender Komponenten ein vorläufiger Materialzusammenhalt hergestellt werden. In einem nachfolgenden Sintervorgang wird anschließend eine vollständige Verbindung der Pulverpartikel durch einen Schmelzvorgang hergestellt und eventuelle Zusatzkomponenten ausgetrieben.

Schließlich wird bei der Ausführung des Herstellungsverfahrens ein Schritt zur inneren Glättung der Kühlschmiermittelkanäle, etwa Strömungsschleifen, ausgeführt, geeigneter Weise nach Fertigstellung des Bauteils, er kann aber grundsätzlich auch zu jedem anderen Zeitpunkt ausgeführt werden. Unter Strömungsschleifen wird das wiederholte Durchpumpen einer mit Schleifpartikeln versetzten Schleiflösung verstanden, wobei hierdurch die Oberflächenrauigkeit wirksam reduziert werden kann, was u. a. zu einem geringeren Strömungswiderstand bzw. Druckverlust während der Durchströmung beiträgt. Die gewünschte Ausbildung von laminaren Strömungen in den Kanälen kann hierbei die Folge sein. Insbesondere können über das Strömungsschleifen Funktionskanten wie Bifurkationen im "Netzwerk" von Kühlschmiermittelkanälen wirksam geglättet werden. Zusätzlich können Pulveranhaftungen, die nach dem generativen Fertigungsprozess in der Kanalstruktur verblieben sind, sowie Querschnittsverengungen entfernt werden, wodurch auch eine nachträgliche Vergrößerung des Kanaldurchmessers ermöglicht wird. Die Oberflächenbeschaffenheit der mittels Strömungsschleifen geglätteten Kanalstruktur besitzt zusätzlich in Strömungsrichtung ausgerichtete Schleifspuren. Diese bieten bei der Durchströmung einen geringeren Reibungswiderstand und können durch Bohr-Reibprozesse nicht in dieser Art erzeugt werden.

Bei dem pulverförmigen Ausgangsmaterial kann es sich insbesondere um ein Metallpulver handeln. Die generative Fertigungsvorrichtung kann eine Vorrichtung zum selektiven Laserschmelzen, selektiven Lasersintern oder Laserauftragsschweißen sein. Die genannten Fertigungsvorrichtungen sind jedoch nur Beispiele; das erfindungsgemäße Herstellverfahren kann auch unter Verwendung anderer generativer Fertigungsvorrichtungen durchgeführt werden, die beispielsweise Elektronenstrahlen oder andere hochenergetische Strahlung als Energiequelle verwenden.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Die Figuren sind lediglich schematische Darstellungen eines Ausführungsbeispiels der Erfindung.

Es zeigen:
**Fig. 1** eine perspektivische Ansicht eines Scheibenfräsers (nicht erfindungsgemäß),
**Fig. 2** eine perspektivische Ansicht des erfindungsgemäßen Scheibenfräsers.

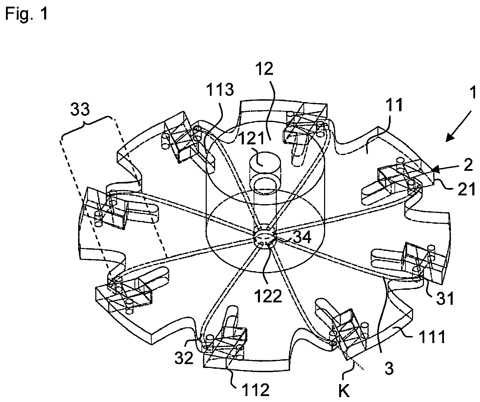

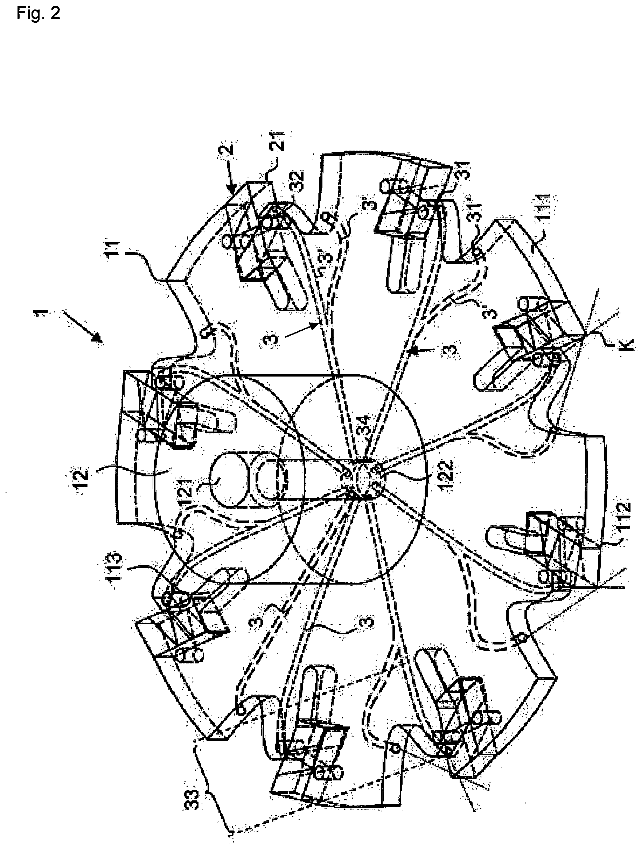

In den **Fig. 1** und **Fig. 2** werden verdeckte Kanten gezeigt. Der Scheibenfräser 1 hat einen Scheibenkörper 11 und eine Nabe 12, die einteilig ausgeführt sind, wobei die Nabe 12 zur Aufnahme in einen Fräsantrieb vorgesehen ist und als koaxial auf den Scheibenkörper 11 aufgesetzter Zylinder ausgebildet ist. Am Außenumfang sind in gleichen Winkelabständen mehrere Schneiden 21 vorgesehen, die als Teil von Wendeschneidplatten 2 ausgebildet sind. Die Wendeschneidplatten 2 sind jeweils auswechselbar in einem Schneidplattensitz 112 aufgenommen, der in dem Scheibenkörper 11 vorliegt und dessen Form und Abmessungen korrespondierend mit der aufzunehmenden Wendeschneidplatte sind.

Von den Schneidplattensitzen 112 erstreckt sich jeweils ein Schlitz 113 radial nach innen, der zur Bereitstellung von genügend Elastizität zum Einspannen der Wendeschneidplatte 2 vorgesehen ist. Um die Spannkraft zu erzeugen, was figurativ nicht gezeigt ist, kann eine Klemmschraube oder ähnliches vorgesehen sein, die eine Spannkraft auf den Schneidplattensitz 112 ausübt. Das "geschlossene Ende" des Schlitzes 113 ist verrundet, wodurch die Kerbwirkung am Schlitzende verringert werden soll.

Im Inneren des Scheibenkörpers 11 verlaufen zu jeder der Schneiden 21 interne Kühlschmiermittelkanäle 3, die sich sternförmig von der Nabe 12 weg erstrecken. Im Bereich der Schneiden 21 treten die Kühlschmiermittelkanäle 3 jeweils aus der Mantelfläche 111 des Scheibenkörpers 11 aus. Die Austrittsöffnung 31 bzw. der Verlauf des Kühlschmiermittelkanals 3 am Austritt 31 ist dabei so gewählt, dass ein Kühlschmiermittelstrahl K auf die Schneide 21 gerichtet werden kann. Hierzu tritt der Kühlschmiermittelkanal 3 schräg aus der Oberfläche des Scheibenkörpers 11 aus, was durch die Krümmung 32 erreicht wird, die in dem Endabschnitt 33 nahe der Schneiden 21 angeordnet ist.

**Fig. 2** zeigt die erfindungsgemäße Lösung, bei der sich zu jeder Schneide 21 zwei Kühlschmiermittelkanäle 3 erstrecken. Erfindungsgemäß möglich, aber nicht gezeigt, können es auch mehr sein. So wird die Schneide 21 von mehreren Seiten bzw. aus unterschiedlichen Winkeln gekühlt. Die Kühlschmiermittelkanäle 3 weisen hierzu in einer Alternative Verzweigungen auf, aus der zwei oder mehr Teilkanäle 3' hervorgehen, die in die jeweiligen Austrittsöffnungen 31,31' münden. Diese Austrittsöffnungen 31,31'erlauben es, einen Kühlschmiermittelstrahl K aus unterschiedlichen Richtungen, d. h., unter einem bestimmten Winkelversatz, auf die Schneide 21 auszubringen. Es kann sogar vorgesehen sein, dass die andere Austrittsöffnung 31' an einer der Schneidplatte 2 gegenüberliegenden Seite des Schneidplattensitzes 112 vorliegt. Die Verzweigung des Kühlschmiermittelkanals K kann dabei nah an den Austrittsöffnungen 31,31' liegen oder aber näher bei der Nabe 12.

Die beiden Austrittsöffnungen 31,31' müssen aber nicht zwingend durch eine Kanalverzweigung versorgt werden, sondern es kann sich in einer anderen Alternative auch jeweils ein unabhängiger Kühlschmiermittelkanal 3 zu den Zuführöffnungen 122 bzw. in die Nut 34 erstrecken, was auch in der **Fig. 2** gezeigt ist. In **Fig. 2** sind hier in Bezug auf die Kanalgestaltung mehrere mögliche Ausführungsformen in einen einzigen Scheibenfräser 1 gezeichnet worden - in einem realen Scheibenfräser 1 wird für eine ökonomische Fertigung nur eine Gestaltungsmöglichkeit für alle zu den Schneidplatten 21 führenden Kanalausgestaltungen gewählt werden. **Fig. 2** zeigt hier also nur beispielhaft einige Möglichkeiten für die Kanalgestaltung.

Die Kühlschmiermittelkanäle 3 werden dadurch mit Kühlschmiermittel versorgt, dass sie sich bis zu einer Innenfläche 121 der Nabe 12 erstrecken und dort in Zuführöffnungen 122 aus der Oberfläche austreten, die wiederum mit einer Kühlschmiermittelquelle verbunden werden. Über die Nabe 12 wird der Scheibenfräser 1 auch mit dem Fräsantrieb verbunden, sodass über eine in die Nabe 12 eingeführte Antriebswelle problemlos auch das Kühlschmiermittel zugeführt werden kann. Dabei können von einer Kühlschmiermittelöffnung der Antriebswelle auch alle Zuführöffnungen 122 des Scheibenfräsers 1 versorgt werden, wobei zu diesem Zweck die umlaufende Nut 34 vorgesehen ist, quasi als Verteiler. Die Abdichtung des Bereichs um die Nut 34 kann über O-Ringe erfolgen.

Der erfindungsgemäße Scheibenfräser 1 wird über ein generatives Fertigungsverfahren hergestellt, da er mit konventionellen urformenden und trennenden Fertigungsverfahren nicht erhalten werden kann, was insbesondere der feinen gekrümmten Kanalstruktur und der vergleichsweise kleinen Dicke des Scheibenkörpers geschuldet ist. Zur Herstellung kann beispielsweise selektives Laserschmelzen eingesetzt werden, wodurch der Scheibenkörper mit der Nabe mit geringer mechanischer Nacharbeit hergestellt werden kann. Der Vorrichtung zum selektiven Laserschmelzen kann quasi der fertige Scheibenfräser 1 entnommen werden, es ist lediglich noch notwendig, die Wendeschneidplatten 2 einzusetzen und Reste pulverförmigen Ausgangsmaterials abzureinigen.

## Patentansprüche

1. Scheibenfräser (1),
der einen Scheibenkörper (11) mit einer zentralen Nabe (12) zur Aufnahme in einem Fräsantrieb und an seinem Außenumfang eine Mehrzahl Schneiden (21) aufweist, wobei in dem Scheibenkörper (11) eine Mehrzahl innen liegender Kühlschmiermittelkanäle (3) verläuft,
**dadurch gekennzeichnet, dass**
der Scheibenfräser (1) generativ gefertigt ist,
jeder der Kühlschmiermittelkanäle (3) im Bereich jeder Schneide (21) zumindest zwei Austrittsöffnungen (31,31') hat,
die so angeordnet sind, dass jeweils ein Kühlschmiermittelstrahl (K), der aus dem Kühlschmiermittelkanal (3) austritt, auf die Schneide (21) richtbar ist, und die dazu ausgebildet sind, die Kühlschmiermittelstrahlen (K) mit einem vorbestimmten Winkelversatz auf die Schneide (21) zu richten, um den Spanabtransport zu unterstützen und den Scheibenkörper (11) zu kühlen; wobei zumindest einer der Kühlschmiermittelstrahlen (K) im Betrieb auf eine Spanablösungszone der Schneide (21) gerichtet ist.

2. Scheibenfräser (1) nach Anspruch 1,
**dadurch gekennzeichnet, dass**
die zumindest zwei Austrittsöffnungen (31,31') dazu ausgebildet sind, von unterschiedlichen Seiten oder aus entgegengesetzten Richtungen jeweils einen Kühlschmiermittelstrahl (K) auf die Schneide (21) zu richten.

3. Scheibenfräser (1) nach zumindest einem der Ansprüche 1 oder 2,
**dadurch gekennzeichnet, dass**
zumindest eine der Austrittsöffnungen (31,31') eine Düse aufweist, bevorzugt eine in die Austrittsöffnung (31,31') eingesetzte Düse, besonders bevorzugt eine winkelverstellbare Düse.

4. Scheibenfräser (1) nach zumindest einem der Ansprüche 1 bis 3,
**dadurch gekennzeichnet, dass**
der Scheibenkörper (11) eine Dicke in einem Bereich von 1 mm und 20 mm, bevorzugt in einem Bereich von 2 mm und 12 mm, aufweist.

5. Scheibenfräser (1) nach zumindest einem der Ansprüche 1 bis 4,
**dadurch gekennzeichnet, dass**
die innen liegenden Kühlschmiermittelkanäle (3)
- sich sternförmig von der Nabe (12) weg erstrecken und/oder
- aus einer Mantelfläche (111) des Scheibenkörpers (11) austreten und/oder
- schräg aus der Oberfläche des Scheibenkörpers (11) austreten und/oder
- zumindest eine Umlenkung (32) haben, die bevorzugt in einem nahe der Austrittsöffnung (31) vorliegenden Endabschnitt (33) vorliegt und die besonders bevorzugt verrundet oder gekrümmt ist.

6. Scheibenfräser (1) nach zumindest einem der Ansprüche 1 bis 5,
**dadurch gekennzeichnet, dass**
die Kühlschmiermittelkanäle (3) an einer Innenfläche der Nabe (12) oder an einer Scheibenfläche austreten und dort eine Zuführöffnung (34) für Kühlschmiermittel haben, die mit einer Kühlschmiermittelquelle fluidisch verbindbar ist, wobei sich die Kühlschmiermittelkanäle (3) jeweils von der Zuführöffnung (34) zu der Austrittsöffnung (31) erstrecken.

7. Scheibenfräser (1) nach Anspruch 6,
**dadurch gekennzeichnet, dass**
an der Innenfläche (121) der Nabe (12) eine umlaufende Nut (122) vorliegt, in der die Kühlschmiermittelkanäle (3) münden, wobei die umlaufende Nut (122) einen abdichtbaren Kopplungsabschnitt zur fluidischen Anbindung an die Kühlschmiermittelquelle bildet.

8. Scheibenfräser (1) nach zumindest einem der Ansprüche 1 bis 7,
**dadurch gekennzeichnet, dass**
die Schneiden (21) jeweils durch austauschbare Schneidplatten (2) gebildet sind, die in einem zugeordneten Schneidplattensitz (112) am Außenumfang des Scheibenkörpers (11) aufgenommen sind und/oder

9. Scheibenfräser (1) nach Anspruch 8,
**dadurch gekennzeichnet, dass**
sich von dem Schneidplattensitz (112) ein Schlitz (113) weg erstreckt, bevorzugt im Wesentlichen radial nach innen, der dazu ausgebildet ist, Klemmelastizität bereitzustellen.

10. Herstellverfahren für einen Scheibenfräser (1) nach zumindest einem der Ansprüche 1 bis 9 unter Verwendung einer generativen Fertigungsvorrichtung, umfassend die Schritte:
a) in die generative Fertigungsvorrichtung Laden eines 3D-Volumendatensatzes, der zumindest den Scheibenkörper (11) mit der zentralen Nabe (12) des Scheibenfräsers (1) beschreibt,
b) Bereitstellen eines pulverförmigen Ausgangsmaterials,
c) schrittweise Herstellen eines Materialzusammenhalts des pulverförmigen Ausgangsmaterials, dabei schrittweise Herstellen des Scheibenkörpers (11) mit der Mehrzahl innen liegender Kühlschmiermittelkanäle (3), die im Bereich jeder Schneide (21) zumindest zwei Austrittsöffnungen (31,31') haben, und mit der zentralen Nabe (12), dann
d) Ausführen eines Schritts zur inneren Glättung der Kühlschmiermittelkanäle (3) mittels Strömungsschleifen,
aufweist.

11. Herstellverfahren nach Anspruch 10,
wobei in dem Schritt c) Aufschmelzen des pulverförmigen Ausgangsmaterials ausgeführt wird.

12. Herstellverfahren nach Anspruch 10 oder 11,
**dadurch gekennzeichnet, dass**
- das pulverförmige Ausgangsmaterial ein Metallpulver ist und/oder
- die generative Fertigungsvorrichtung eine Vorrichtung zum selektiven Laserschmelzen, selektiven Lasersintern oder Laserauftragsschweißen ist.

## Claims

1. Disc-type milling cutter (1),
comprising a disc body (11) with a central hub (12) for accommodation in a milling drive and, on its outer circumference, a plurality of blades (21), wherein a plurality of coolant-lubricant channels (3) situated on the inside extend in the disc body (11),
**characterised in that**
the disc-type milling cutter (1) is manufactured by generative manufacturing;
each of the coolant-lubricant channels (3) has at least two exit openings (31, 31') in the region of each blade (21)
that are arranged appropriately such that one coolant-lubricant jet (K) each exiting from the coolant-lubricant channel (3) can be directed at the blade (21), and which are designed to direct the coolant-lubricant jets (K) at the blade (21) at a predetermined angular offset in order to support the chips being transported away and to cool the disc body (11); whereby, in operation, at least one of the coolant-lubricant jets (K) is directed at a chip detachment zone of the blade (21).

2. Disc-type milling cutter (1) according to claim 1,
**characterised in that**
the at least two exit openings (31, 31') are designed such as to direct one coolant-lubricant jet (K) each at the blade (21) from different sides or from opposite directions.

3. Disc-type milling cutter (1) according to at least one of the claims 1 or 2,
**characterised in that**
at least one of the exit openings (31, 31') comprises a nozzle, preferably a nozzle that is inserted into the exit opening (31, 31'), particularly preferably an angle-adjustable nozzle.

4. Disc-type milling cutter (1) according to at least one of the claims 1 to 3,
**characterised in that**
the disc body (11) comprises a thickness in the range of 1 mm to 20 mm, preferably in the range of 2 mm to 12 mm.

5. Disc-type milling cutter (1) according to at least one of the claims 1 to 4,
**characterised in that**
the coolant-lubricant channels (3) that are situated on the inside
- extend radially away from the hub (12) and/or
- exit from a jacket surface (111) of the disc body (11) and/or
- exit obliquely from the surface of the disc body (11) and/or
- comprise at least one deflection (32), which preferably is situated in an end section (33) that is close to the exit opening (31) and which preferably is rounded or curved.

6. Disc-type milling cutter (1) according to at least one of the claims 1 to 5,
**characterised in that**
the coolant-lubricant channels (3) exit on an inside surface of the hub (12) or on a disc surface and, in this place, have a feed opening (34) for coolant-lubricant that can be fluidically connected to a coolant-lubricant source, wherein the coolant-lubricant channels (3) each extend from the feed opening (34) to the exit opening (31).

7. Disc-type milling cutter (1) according to claim 6,
**characterised in that**
a peripheral groove (122) is present on the inside surface (121) of the hub (12) and has the coolant-lubricant channels (3) merge into it, wherein the peripheral groove (122) forms a sealable coupling section for fluidic connection to the coolant-lubricant source.

8. Disc-type milling cutter (1) according to at least one of the claims 1 to 7,
**characterised in that**
the blades (21) each are provided in the form of replaceable cutting plates (2) that are accommodated in an associated cutting plate seat (112) on the outer circumference of the disc body (11) and/or

9. Disc-type milling cutter (1) according to claim 8,
**characterised in that**
a slit (113) extends away from the cutting plate seat (112), preferably essentially radially inwards, and is designed to provide for clamping elasticity.

10. Manufacturing method for a disc-type milling cutter (1) according to at least one of the claims 1 to 9 through the use of a generative manufacturing device, comprising the steps of:
a) loading, into the generative manufacturing device, a 3D volume data set that describes at least the disc body (11) with the central hub (12) of the disc-type milling cutter (1);
b) providing a powdered starting material;
c) stepwise production of a bonded material from the powdered starting material, including stepwise production of the disc body (11) with the plurality of coolant-lubricant channels (3) that are situated on the inside and have at least two exit openings (31, 31') in the region of each blade (21), and with the central hub (12), followed by
d) executing a step for inside smoothing of the coolant-lubricant channels (3) by means of flow grinding.

11. Manufacturing method according to claim 10,
wherein the powdered starting material is being melted in step c).

12. Manufacturing method according to claim 10 or 11,
**characterised in that**
- the powdered starting material is a metal powder and/or
- the generative manufacturing device is a device for selective laser melting, selective laser sintering or laser deposit welding.

## Revendications

1. Fraise-disque (1)
qui présente un corps de disque (11) avec un moyeu central (12) pour la réception dans un entraînement de fraise et une pluralité de lames (21) sur son pourtour extérieur, dans laquelle une pluralité de canaux de lubrifiant de refroidissement (3) intérieurs passent dans le corps de disque (11),
**caractérisée en ce que**
la fraise-disque (1) est fabriquée de manière générative,
chacun des canaux de lubrifiant de refroidissement (3) a au moins deux ouvertures de sortie (31, 31') au niveau de chaque lame (21), qui sont ainsi agencées que respectivement un jet de lubrifiant de refroidissement (K) qui sort du canal de lubrifiant de refroidissement (3) peut être dirigé sur la lame (21) et qui sont conçues pour diriger les jets de lubrifiant de refroidissement (K) avec un décalage d'angle prédéfini sur la lame (21) pour favoriser l'enlèvement des copeaux et refroidir le corps de disque (11) ; dans laquelle au moins un des jets de lubrifiant de refroidissement (K) est dirigé sur une zone de séparation de copeaux de la lame (21) pendant le fonctionnement.

2. Fraise-disque (1) selon la revendication 1,
**caractérisée en ce qu'au**
moins les deux ouvertures de sortie (31, 31') sont formées pour aligner respectivement un jet de lubrifiant de refroidissement (K) sur la lame (21) depuis des côtés différents ou des directions opposées.

3. Fraise-disque (1) selon au moins l'une des revendications 1 ou 2,
**caractérisée en ce qu'au**
moins une des ouvertures de sortie (31, 31') présente une buse, de préférence une buse intégrée dans l'ouverture de sortie (31, 31'), en particulier de préférence une buse dont l'angle peut être déplacé.

4. Fraise-disque (1) selon au moins l'une des revendications 1 à 3,
**caractérisée en ce que**
le corps de disque (11) présente une épaisseur dans une plage de 1 mm et 20 mm, de préférence dans une plage de 2 mm et 12 mm.

5. Fraise-disque (1) selon au moins l'une des revendications 1 à 4,
**caractérisée en ce que**
les canaux de lubrifiant de refroidissement (3) intérieurs
- s'éloignent en étoile à partir du moyeu (12) et/ou
- sortent d'une surface d'enveloppe (111) du corps de disque (11) et/ou
- sortent de biais de la surface du corps de disque (11) et/ou
- ont au moins un changement de direction (32) qui est situé de préférence dans un tronçon d'extrémité (33) proche de l'ouverture de sortie (31) et qui est en particulier arrondi ou coudé.

6. Fraise-disque (1) selon au moins l'une des revendications 1 à 5,
**caractérisée en ce que**
les canaux de lubrifiant de refroidissement (3) sortent sur une face intérieure du moyeu (12) ou une face du disque et y ont une ouverture d'entrée (34) pour du lubrifiant de refroidissement qui peut être reliée de manière fluidique à une source de lubrifiant de refroidissement, dans laquelle les canaux de lubrifiant de refroidissement (3) s'étendent respectivement de l'ouverture d'entrée (34) en direction de l'ouverture de sortie (31).

7. Fraise-disque (1) selon la revendication 6,
**caractérisée en ce qu'une**
rainure périphérique (122) est présente sur la face intérieure (121) du moyeu (12), dans laquelle les canaux de lubrifiant de refroidissement (3) débouchent, dans laquelle la rainure périphérique (122) forme un tronçon de couplage pouvant être étanchéifié pour la liaison fluidique avec la source de lubrifiant de refroidissement.

8. Fraise-disque (1) selon au moins l'une des revendications 1 à 7,
**caractérisée en ce que**
les lames (21) sont formées respectivement par des plateaux de coupe (2) interchangeables, qui sont reçus dans un siège de plateau de coupe (112) correspondant sur le pourtour extérieur du corps de disque (11), et/ou

9. fraise-disque (1) selon la revendication 8,
**caractérisée en ce qu'une**
fente (113) s'éloigne du siège de plateau de coupe (112), de préférence essentiellement radialement vers l'intérieur, laquelle est conçue pour fournir une élasticité de serrage.

10. Procédé de fabrication pour une fraise-disque (1) selon au moins l'une des revendications 1 à 9 en employant un dispositif de fabrication génératif, comprenant les étapes de :
a) chargement d'un jeu de données de volume 3D dans le dispositif de fabrication génératif qui décrit au moins le corps de disque (11) avec le moyeu (12) central de la fraise-disque (1),
b) fourniture d'un matériau de départ pulvérulent,
c) fabrication par étapes d'une cohésion matérielle du matériau de départ pulvérulent, en cela, fabrication par étapes du corps de disque (11) avec la pluralité de canaux de lubrifiant de refroidissement (3) intérieurs, qui ont au moins deux ouvertures de sortie (31, 31') au niveau de chaque lame (21), et
avec le moyeu central (12), puis
d) réalisation d'une étape de lissage intérieur des canaux de lubrifiant de refroidissement (3) par meulage par flux.

11. Procédé de fabrication selon la revendication 10, dans lequel à l'étape c), le matériau de départ pulvérulent est fondu.

12. Procédé de fabrication selon la revendication 10 ou 11,
**caractérisé en ce que**
- le matériau de départ pulvérulent est une poudre métallique et/ou
- le dispositif de fabrication génératif est un dispositif pour la fonte laser sélective, le frittage au laser sélectif ou le soudage au laser.
